# EUROPEAN PATENT SPECIFICATION

(11) **EP 4 439 822 B1**
(45) Date of publication and mention of the grant of the patent: **27.08.2025**
(21) Application number: 24166269.1
(22) Date of filing: 26.03.2024
(51) Int. Cl.: H01M 50/209, H01M 50/22, H01M 50/244, H01M 50/291, H01M 50/289, H01M 50/264, H01M 50/293, H01M 10/613, H01M 10/6556, H01M 10/658, H01M 10/625

(54) **BATTERY PACK**
BATTERIEPACK
BLOC-BATTERIE

(30) Priority: 26.03.2023 KR 20230039389; 04.05.2023 KR 20230058400
(43) Date of publication of application: 02.10.2024
(73) Proprietor: Samsung SDI Co., Ltd., Yongin-si, Gyeonggi-do 17084 (KR)
(72) Inventor: Cho, Mansik, 17084 Yongin-si, Gyeonggi-do (KR)
(74) Representative: Gulde & Partner

(56) References cited:
- WO-A1-2021/133919
- WO-A1-2022/024284

## Description

### BACKGROUND

### 1. Field

Embodiments relate to a battery pack.

### 2. Description of the Related Art

Secondary batteries can be charged and discharged, unlike primary batteries, that cannot be recharged. Secondary batteries may be used as energy sources for mobile devices, electric vehicles, hybrid vehicles, electric bicycles, uninterruptible power supplies, or the like. Depending on the type of external devices to which secondary batteries are applied, the secondary batteries may be used in the form of a single battery or a module in which a plurality of batteries are connected and bundled into a unit.

### SUMMARY

The embodiments may be realized by providing a battery pack including a housing frame configured to accommodate (or accommodating) at least one battery cell; and an insulating frame provided between the at least one battery cell and the housing frame, the insulating frame including: an opening through which a bottom of the at least one battery cell is exposed to a bottom of the housing frame, a flange portion that extends along a periphery of the opening, defines the opening, and faces the bottom of the at least one battery cell, and a side portion that is bent from the flange portion and faces a side surface of the at least one battery cell, wherein the flange portion of the insulating frame includes: a convex pattern that protrudes toward the bottom of the at least one battery cell, and at least one flow channel that forms a flow path for an adhesive, the at least one flow channel being a stepped portion stepped down (or being recessed) from the convex pattern in a depth direction of the flange portion (e.g., vertical direction) opposite to the bottom of the at least one battery cell.

The battery pack may provide three-dimensional adhesion between the housing frame accommodating battery cells, the insulating frame providing insulation from the battery cells inside the housing frame, and the battery cells, so that the battery cells accommodated in the insulating frame and the housing frame are firmly fixed.

The at least one flow channel may include at least one flow channel (e.g., a flange flow channel) formed on the flange portion of the insulating frame and at least one flow channel (e.g., a side portion flow channel) formed on the side portion of the insulating frame.

The at least one flow channel formed on the flange portion of the insulating frame may include a first flow channel and a second flow channel; and the at least one flow channel formed on the side portion of the insulating frame may include a third flow channel.

The first flow channel may extend in a longitudinal direction of the flange portion of the insulating frame, the second flow channel may extend in a width direction of the flange portion of the insulating frame that crosses the longitudinal direction of the flange portion of the insulating frame, and the third flow channel may extend in the height direction (e.g., vertical direction) on the side portion of the insulating frame, the height direction crossing the width direction of the flange portion and the longitudinal direction of the flange portion.

The third flow channel formed on the side portion of the insulating frame may continuously extend from the second flow channel formed on the flange portion of the insulating frame.

The convex pattern may include an isolation pattern that is surrounded by the first and second flow channels and is formed at an inner position of the flange portion of the insulating frame adjacent to the opening; and a connection pattern that extends toward the side portion of the insulating frame at an outer position of the flange portion of the insulating frame adjacent to the side portion, the first flow channel extending between the isolation pattern and the connection pattern.

The second flow channel may formed between adjacent isolation patterns and between adjacent connection patterns, and a section of the second flow channel formed between the adjacent isolation patterns and a section of the second flow channel formed between the adjacent connection patterns may be continuously connected to each other.

The third flow channel may be formed between adjacent connection patterns formed on the side portion of the insulating frame.

The at least one battery cell may include a plurality of battery cells arranged in a first direction.

The bottom of the at least one battery cell may be supported on a supporting surface (e.g., an upper surface) of the convex pattern.

The at least one battery cell may be accommodated in the housing frame including the insulating frame therein, and an adhesive on the bottom of the housing frame may be flowable along the at least one flow channel in response to a pressure applied due to a weight of the at least one battery cell.

The battery pack may further comprise the at least one battery cell accommodated in the housing frame including the insulating frame therein, and an adhesive provided on the bottom of the housing frame, wherein the adhesive is flowable along the at least one flow channel in response to a pressure applied due to a weight of the at least one battery cell,

The adhesive may be flowable from the first and second flow channels formed on the flange portion of the insulating frame along the third flow channel formed on the side portion of the insulating frame in response to the pressure applied due to the weight of the at least one battery cell.

The adhesive may be in the first to third flow channels.

The battery pack may be configured to allow an excess adhesive, which exceeds an accommodation limit of the adhesive provided by the first and second flow channels formed on the flange portion of the insulating frame, to at least partially fill the third flow channel formed on the side portion of the insulating frame.

An upper surface of the adhesive in the third flow channel may be higher, in the height or vertical direction, than an upper surface of the adhesive in the first and second flow channels.

The adhesive may fill an entirety of the at least one flow channel formed on the flange portion of the insulating frame and may fill a portion of the flow channel formed on the side portion of the insulating frame.

The adhesive may fill an entirety of the first and second flow channels formed on the flange portion of the insulating frame and may fill a portion of the third flow channel formed on the side portion of the insulating frame.

The adhesive may fill a portion of the third flow channel that is at a lower level adjacent to the flange portion of the insulating frame in the third flow channel.

The adhesive may fill 10 % or more of a total height of the third flow channel formed on the side portion of the insulating frame.

The bottom of the at least one battery cell may be coupled to the housing frame at a first adhesion region therebetween, the first adhesion region including the adhesive filling the opening, and may be coupled to the insulating frame at a second adhesion region therebetween, the second adhesion region including the adhesive filling the at least one flow channel formed on the flange portion of the insulating frame. The side surface of the at least one battery cell may be coupled to the insulating frame at a third adhesion region therebetween, the third adhesion region including the adhesive filling the flow channel formed on the side portion of the insulating frame.

The bottom of the at least one battery cell may be coupled to the housing frame at a first adhesion region therebetween, the first adhesion region including the adhesive filling the opening, and may be coupled to the insulating frame at a second adhesion region therebetween, the second adhesion region including the adhesive filling the first and second flow channels, and the side surface of the at least one battery cell may be coupled to the insulating frame at a third adhesion region therebetween, the third adhesion region including the adhesive filling the third flow channel.

An area of the opening filled with the adhesive may be greater than a sum of areas of the flow channels formed on the flange portion and on the side portion of the insulating frame filled with the adhesive.

The area of the opening filled with the adhesive may be greater than a sum of areas of the first to third flow channels filled with the adhesive.

An upper surface of the adhesive filled in the opening and an upper surface of the adhesive filled in the at least one flow channel formed on the flange portion of the insulating frame may be substantially coplanar.

The upper surface of the adhesive filled in the opening and an upper surface of the adhesive filled in the first and second flow channels may be substantially coplanar.

A supporting surface of the convex pattern on which the bottom of the at least one battery cell is supported may be substantially coplanar with the upper surface of the adhesive filled in the opening and the upper surface of the adhesive filled in the at least one flow channel formed on the flange portion of the insulating frame.

The supporting surface of the convex pattern on which the bottom of the at least one battery cell is supported may be substantially coplanar with the upper surface of the adhesive filled in the opening and the upper surface of the adhesive filled in the first and second flow channels.

### BRIEF DESCRIPTION OF THE DRAWINGS

Features will be apparent to those of skill in the art by describing in detail exemplary embodiments with reference to the attached drawings in which:
FIG. 1 is an exploded perspective view of a battery pack according to embodiments of the present disclosure;
FIG. 2 is an exploded perspective view illustrating a relative arrangement configuration between a battery cell and an insulating frame in the battery pack of FIG. 1;
FIG. 3 is a perspective view of the insulating frame of FIG. 1;
FIG. 4 is a perspective view of a portion of the insulating frame of FIG. 2 relating to structures of first to third flow channels in the insulating frame;
FIG. 5 is a perspective view of a portion of the insulating frame and a housing frame of FIG. 1 relating to a structure in which an adhesive fills the insulating frame and the housing frame of FIG. 1;
FIG. 6 is a perspective view of the portion of FIG. 5 relating to a structure of the adhesive that fills the insulating frame and the housing frame; and
FIG. 7 is a cross-sectional view taken along a cutting line that extends across the first to third flow channels of FIG. 5 relating to a structure of the adhesive that fills the insulating frame and the housing frame.

### DETAILED DESCRIPTION

Example embodiments will now be described more fully hereinafter with reference to the accompanying drawings; however, they may be embodied in different forms and should not be construed as limited to the embodiments set forth herein as long as being encompassed by the accompanying claims. Rather, these embodiments are provided so that this disclosure will be thorough and complete, and will fully convey exemplary implementations to those skilled in the art.

In the drawings, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout. As used herein, the terms "first," "second," and the like are merely for identification and differentiation, and are not intended to imply or require sequential inclusion (e.g., a third element and a fourth element may be described without implying or requiring the presence of a first element or second element).

As used herein, the terms "or" and "and/or" are not exclusive terms, and include any and all combinations of one or more of the associated listed items. Expressions such as "at least one of, "when preceding a list of elements, modify the entire list of elements and do not modify the individual elements of the list.

Hereinafter, a battery pack according to embodiments of the present disclosure are described with reference to the accompanying drawings.

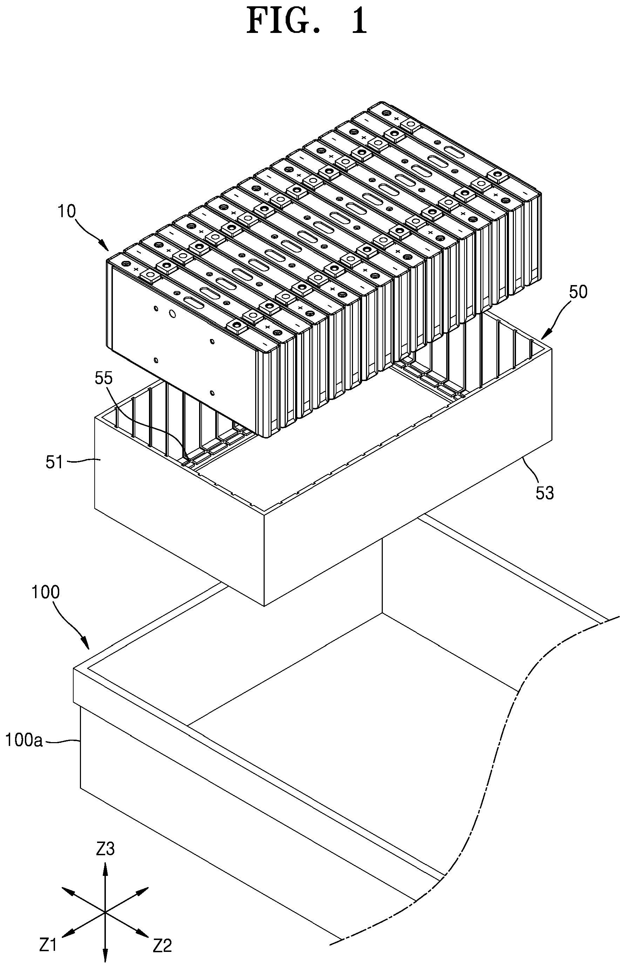

FIG. 1 is an exploded perspective view of a battery pack according to embodiments of the present disclosure.

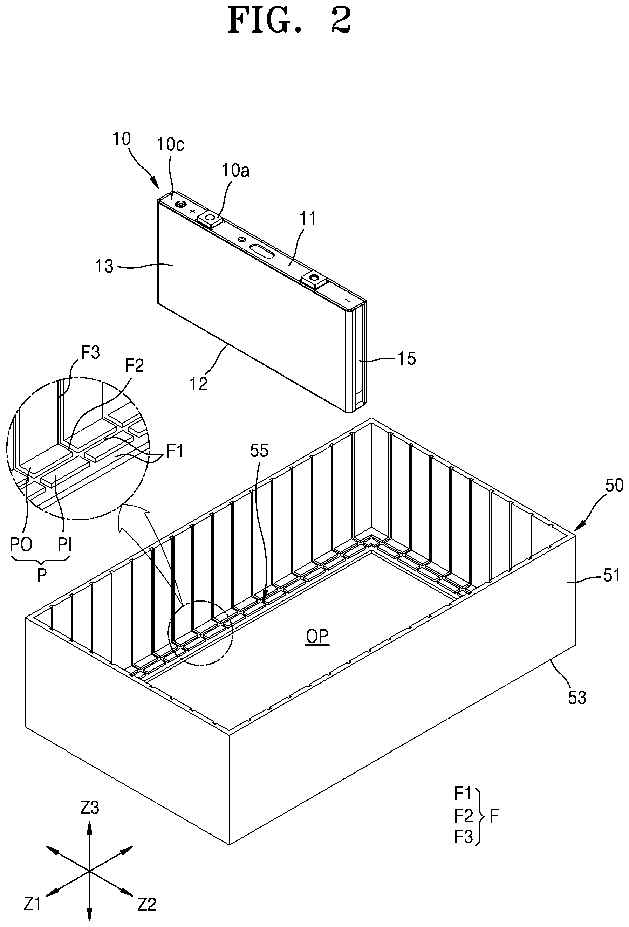

FIG. 2 is an exploded perspective view illustrating a relative arrangement configuration between a battery cell 10 and an insulating frame 50 in the battery pack of FIG. 1.

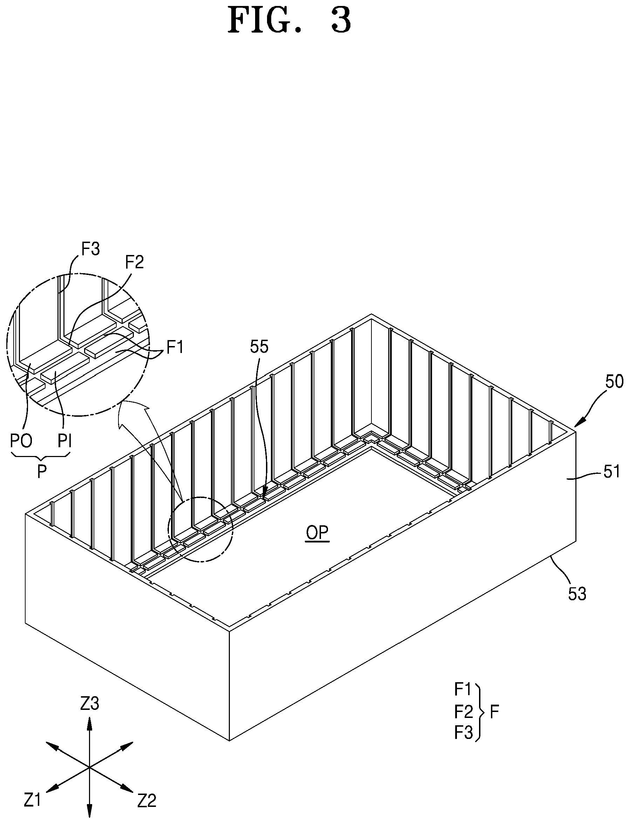

FIG. 3 is a perspective view of the insulating frame 50 of FIG. 1.

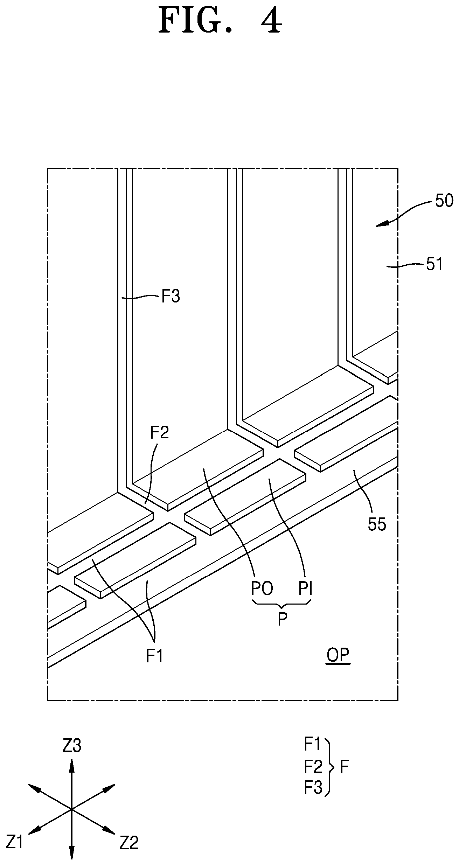

FIG. 4 is a perspective view of a portion of the insulating frame 50 of FIG. 2 relating to structures of first to third flow channels F1, F2, and F3 in the insulating frame 50.

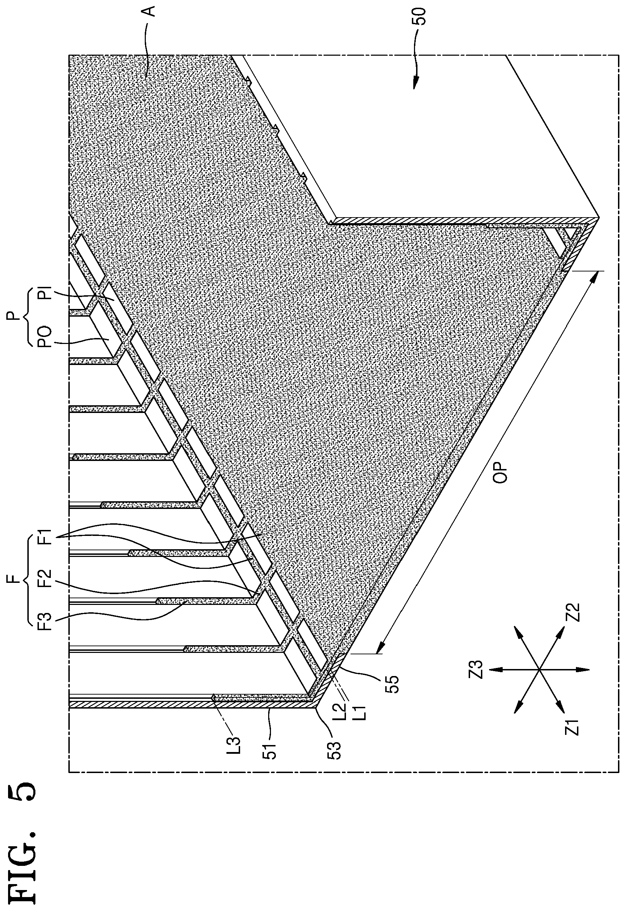

FIG. 5 is a perspective view of a portion of the insulating frame 50 and a housing frame 100 of FIG. 1 and illustrates a structure in which an adhesive A fills the insulating frame 50 and the housing frame 100 of FIG. 1.

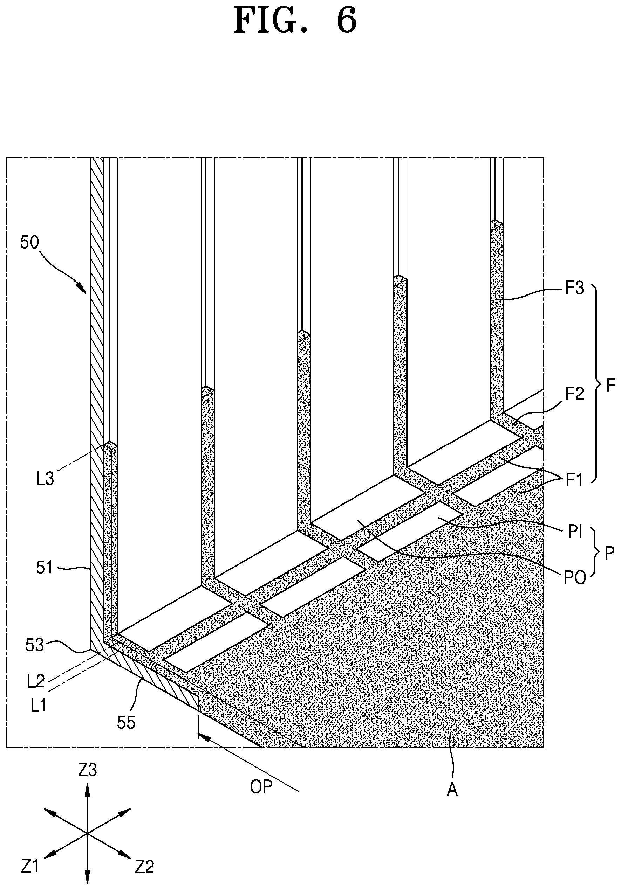

FIG. 6 is a perspective view of the portion of FIG. 5 relating to a structure of the adhesive A that fills the insulating frame 50 and the housing frame 100.

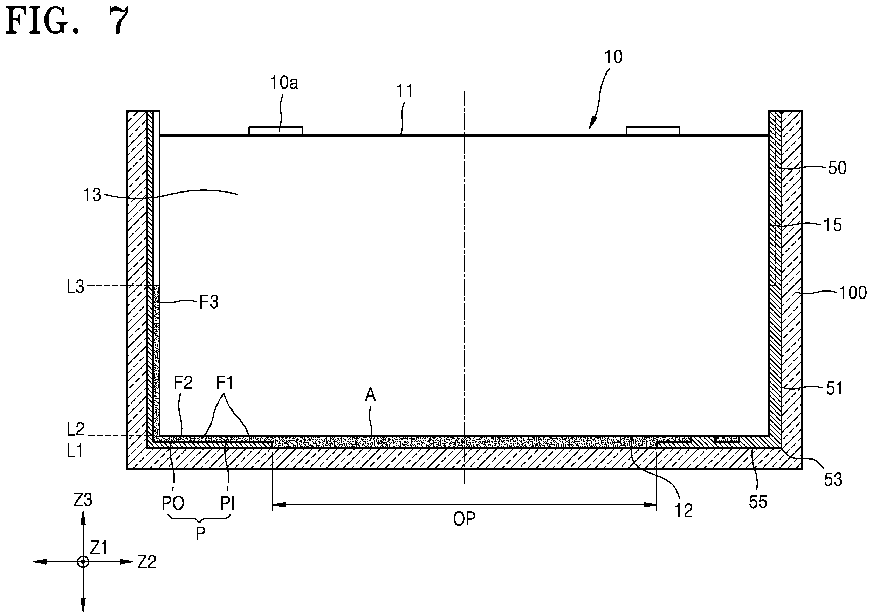

FIG. 7 is a cross-sectional view taken along a cutting line that extends across the first to third flow channels F1, F2, and F3 of FIG. 5 relating to a structure of the adhesive A that fills the insulating frame 50 and the housing frame 100.

Referring to FIGS. 1 to 7, the battery pack according to the present disclosure may include: the (e.g., at least one) battery cell 10; the housing frame 100 for accommodating the battery cell 10; and the insulating frame 50 provided between the battery cell 10 and the housing frame 100 and including an opening OP, through which a bottom of the battery cell 10 is exposed to a bottom of the housing frame 100, a flange portion 55 that defines the opening OP, extends along a periphery of the opening OP, and has a surface that faces the bottom of the battery cell 10, and a side portion 51 that is bent from (e.g., extends upwardly relative to) the flange portion 55 and faces a side surface of the battery cell 10. The flange portion 55 of the insulating frame 50 may include a convex pattern P (that protrudes toward the bottom of the battery cell 10) and at least one flow channel F (that provides or forms a flow path for the adhesive A). The flow channel may form a stepped portion from the convex pattern P in a direction opposite to or away from the bottom of the battery cell 10 (e.g., the flow channel may be a recessed region adjacent to the convex pattern P).

In an implementation, the battery cell 10 may include a case 10c, an electrode assembly (not shown) accommodated inside the case 10c, and an electrode terminal 10a electrically connected to the electrode assembly and exposed to the outside of the case 10c. In an implementation, a plurality of battery cells 10 may be arranged in a first direction Z1, and each may include first and second electrode terminals of different polarities arranged in a second direction Z2 crossing the first direction Z1.

In an implementation, the battery cell 10 may include an upper surface 11 including an electrode terminal 10a formed thereon, a bottom 12 opposite to the upper surface 11, and side surfaces 13 and 15 formed between the upper surface 11 and the bottom 12 of the battery cell 10. The side surfaces 13 and 15 of the battery cell 10 may connect the upper surface 11 and the bottom 12 of the battery cell 10 to each other, and may include a wide side surface 13 occupying a relatively large area and a narrow side surface 15 occupying a relatively small area. In an implementation, the upper surface 11 and the bottom 12 of the battery cell 10 may face each other (e.g., may be parallel and spaced apart) in a third direction Z3 crossing the first and second directions Z1 and Z2. In an implementation, the third direction Z3 may indicate a direction in which the battery cell 10 is assembled and may indicate a direction in which the battery cell 10 is assembled to or inserted into the housing frame 100. In an implementation, the bottom 12 of the battery cell 10 may form a first adhesive portion or first adhesion region with the housing frame 100 and may also form a second adhesive portion or second adhesion region with the insulating frame 50. In an implementation, the housing frame 100 and the insulating frame 50 (arranged inside the housing frame 100) may be coupled to each other through or at the bottom 12 of the battery cell 10. In an implementation, the side surface 15 (corresponding to the narrow side surface 15) of the battery cell 10 may form a third adhesive portion or third adhesion region with the insulating frame 50. In an implementation, the battery cell 10 may be coupled to the insulating frame 50 through both the second adhesive portion at the bottom 12 of the battery cell 10 and the third adhesive portion at the side surface 15 (corresponding to the narrow side surface 15) and may be coupled to the housing frame 100 through the first adhesive portion at the bottom 12 of the battery cell 10. The first to third adhesive portions are described below in more detail.

In an implementation, the battery pack may include a plurality of rows of battery cells 10 arranged (e.g., side by side) in the second direction Z2, and the battery cells 10 in each of the rows may be arranged in (e.g., aligned or stacked along) the first direction Z1. In an implementation, the battery pack may include a plurality of battery cells 10 arranged in the first and second directions Z1 and Z2. The battery pack according to embodiments of the present disclosure may include the housing frame 100 that forms an exterior of the battery pack and surrounds the outside of the plurality of battery cells 10 arranged in the first and second directions Z1 and Z2.

The housing frame 100 may provide an accommodation space for accommodating the plurality of battery cells 10 and may surround the outside of the plurality of battery cells 10 that forms the battery pack. In an implementation, the housing frame 100 may include, e.g., a main wall 100a for accommodating all of the battery cells 10, e.g., entirely surrounding the battery cells 10 arranged in the first and second directions Z1 and Z2; and partition walls (not shown) for accommodating the battery cells 10 while isolating one row of battery cells 10 arranged in the first direction Z1 from another row of the battery cells 10 adjacent to the one row of the battery cells 10 in the second direction Z2. However, in embodiments of the present disclosure, the housing frame 100 may include the main wall 100a for accommodating the plurality of battery cells 10 arranged in the first and second directions Z1 and Z2, and may not include partition walls for accommodating the battery cells 10 while isolating the battery cells 10 in different rows adjacent to each other in the second direction Z2. In an implementation, the housing frame 100 may include both the main wall 100a and partition walls that form the accommodation space for individually and independently accommodating a row of battery cells 10 arranged in the first direction Z1, or the housing frame 100 may include only the main wall 100a that forms the accommodation space for entirely accommodating the plurality of battery cells 10 arranged in the first and second directions Z1 and Z2. In an implementation, the housing frame 100 may include the bottom that faces the bottom 12 of the battery cell 10 and may also include the main wall 100a entirely surrounding the bottom of the housing frame 100 and the partition walls extending across the bottom of the housing frame 100. In an implementation, the accommodation space for individually accommodating one row of battery cells 10 may be provided.

In an implementation, the housing frame 100 may include a first adhesive portion that forms adhesion with or is adhered to the battery cell 10. In an implementation, the first adhesive portion may be formed on the bottom 12 of the battery cell 10 and the bottom of the housing frame 100, which face each other. As used herein, the first adhesive portion may include regions in which the adhesion between the housing frame 100 and the battery cell 10 is formed. In an implementation, the first adhesive portion of the housing frame 100 may represent a region that forms the adhesion to the battery cell 10, and the first adhesive portion of the battery cell 10 may represent a region that forms the adhesion to the housing frame 100. In an implementation, the first adhesive portion may be formed on both the bottom of the housing frame 100 and the bottom 12 of the battery cell 10 which face each other, and the adhesive A provided on the first adhesive portion may bond the bottom of the housing frame 100 and the bottom 12 of the battery cell 10 which face each other. In an implementation, the first adhesive portion of the housing frame 100 may be formed only on a portion of the bottom of the housing frame 100 (a region corresponding to or underlying the opening OP of the insulating frame 50) rather than the entire bottom of the housing frame 100, and the first adhesive portion of the battery cell 10 may be formed only on a portion of the bottom 12 of the battery cell 10 (a region corresponding to or overlying the opening OP of the insulating frame 50) rather than the entire bottom 12 of the battery cell 10.

In an implementation, the housing frame 100 may include a metal material, e.g., a metal material having excellent forming properties and impact resistance. The insulating frame 50 may be located between the housing frame 100 and the battery cell 10. The insulating frame 50 may provide electrical insulation between the housing frame 100 and the battery cell 10.

In an implementation, the insulating frame 50 may include, e.g., the opening OP exposing (e.g., at least a part of) the bottom 12 of the battery cell 10; the flange portion 55 facing the (remaining parts of the) bottom 12 of the battery cell 10 and defining the opening OP (e.g., extending along or around the periphery of the opening OP); and the side portion 51 bent from the flange portion 55 and facing the side surface of the battery cell 10. In an implementation, the insulating frame 50 may form the second adhesive portion with the battery cell 10 through or at the flange portion 55 and the third adhesive portion with the battery cell 10 through or at the side portion 51. In an implementation, the insulating frame 50 may face the bottom 12 of the battery cell 10 at the flange portion 55 and may form the second adhesive portion with the bottom 12 of the battery cell 10 and may also face the side surface 15 (corresponding to the narrow side) of the battery cell 10 through the side portion 51 and may form the third adhesive portion with the side surface 15 (corresponding to the narrow side) of the battery cell 10.

In an implementation, the insulating frame 50 may include the flange portion 55 and the side portion 51 respectively facing the bottom 12 and the side surface 15 (corresponding to the narrow side) of the battery cell 10. In an implementation, the flange portion 55 of the insulating frame 50 may face the bottom (e.g., outer) edge of the bottom 12 of the battery cell 10. In an implementation, the opening OP surrounded by the flange portion 55 may expose the bottom center of the bottom 12 of the battery cell 10 and allow the center of the bottom 12 of the battery cell 10 and the bottom of the housing frame 100 to directly face each other. In an implementation, the bottom edge of the bottom 12 of the battery cell 10 may face the flange portion 55 of the insulating frame 50, and the bottom center of the bottom 12 of the battery cell 10 may face the bottom of the housing frame 100 through the opening OP of the insulating frame 50 surrounded by the flange portion 55.

In an implementation, the bottom edge of the bottom 12 of the battery cell 10 may face the flange portion 55 of the insulating frame 50 and may form the second adhesive portion with the flange portion 55, and the bottom center of the bottom 12 of the battery cell 10 may face the bottom of the housing frame 100 through the opening OP of the insulating frame 50 and may form the first adhesive portion with the bottom of the housing frame 100. As described above, the bottom 12 of the battery cell 10 may form the second adhesive portion with the insulating frame 50 and may also form the first adhesive portion with the housing frame 100. In an implementation, the insulating frame 50 may be coupled with the housing frame 100 due to the battery cell 10 that forms the second adhesive portion and the first adhesive portion with the insulating frame 50 and the housing frame 100, respectively, which are different from each other. In an implementation, the battery cell 10 forming the second adhesive portion and the first adhesive portion with the insulating frame 50 and the housing frame 100, respectively, may mediate or facilitate the coupling between the insulating frame 50 and the housing frame 100 through the second adhesive portion and the first adhesive portion, respectively. In an implementation, the mediation of coupling between the insulating frame 50 and the housing frame 100 by the battery cell 10 may indicate that, rather than the battery cell 10 itself providing adhesive force, the adhesive A of the second adhesive portion and the first adhesive portion of the battery cell 10 may form or provide adhesion between the insulating frame 50 and the housing frame 100. Therefore, the relative position of the insulating frame 50 and the housing frame 100 individually bonded to the bottom of the battery cell 10 may be fixed by the battery cell 10. In an implementation, it is possible to fix the relative position of the housing frame 100 forming the first adhesive portion with the battery cell 10 and the insulating frame 50 forming the second adhesive portion and the third adhesive portion with the battery cell 10. In an implementation, the battery cell 10, the insulating frame 50, and the housing frame 100 may form a fixed assembly through the first to third adhesive portions and may not be separated from each other.

In an implementation, the flow channel F (e.g., the first to third flow channels F1, F2, and F3) defining or forming flow paths of the adhesive A of the second adhesive portion and the third adhesive portion with the battery cell 10 may be formed in the insulating frame 50. Throughout this specification, the second and third adhesive portions may refer to regions in which the insulating frame 50 and the battery cell 10 face each other and may refer to regions configured to exert adhesive force between the insulating frame 50 and the battery cell 10 through the adhesive A. Throughout this specification, the second and third adhesive portions may refer to regions in which mutual adhesive force is exerted through the adhesive A formed in regions in which the insulating frame 50 and the battery cell 10 face each other. Throughout this specification, even if the adhesive A were not included or the adhesive force is not exerted over the entire region of the insulating frame 50 and the battery cell 10 facing each other, e.g., even if the adhesive A were formed or the adhesive force were exerted over a partial region of the insulating frame 50 and the battery cell 10 facing each other, the entire region in which the insulating frame 50 and the battery cell 10 face each other may be broadly defined as the second and third adhesive portions.

Throughout this specification, the second and third adhesive portions refer to regions in which the adhesive force is exerted by the adhesive A in regions in which the insulating frame 50 and the battery cell 10 face each other, and the flow channel F (e.g., the first to third flow channels F1, F2, and F3) of the second and third adhesive portions may refer to a path that defines a flow path for the adhesive A so as to form the second and third adhesive portions having uniform adhesive strength as the adhesive A flows. In an implementation, the adhesive A may evenly flow along the flow channel F (e.g., the first to third flow channels F1, F2, and F3) of the second and third adhesive portions, and the uniform adhesive strength may be exerted across the second and third adhesive portions.

Hereinafter, the flow channel F formed in the insulating frame 50 is described. The flow channel F (e.g., the first to third flow channels F1, F2, and F3) formed in the insulating frame 50 may form the second and third adhesive portions as described above.

In an implementation, the flow channel F forming a path for the adhesive A may be formed in the insulating frame 50, and the flow channel F may be three-dimensionally formed in the first to third directions Z1, Z2, and Z3. In an implementation, the flow channel F may include the first and second flow channels F1 and F2 (e.g., flange flow channels) formed in the flange portion 55 and the third flow channel F3 (e.g., side portion flow channel) formed in the side portion 51. In an implementation, the first to third flow channels F1, F2, and F3 may be connected to each other (e.g., in fluid communication with one another) and may extend (e.g., lengthwise) in the first to third directions Z1, Z2, and Z3. In an implementation, it may be said that the three-dimensional flow channel F may be formed in the insulating frame 50 in the first to third directions Z1, Z2, and Z3 which are different from each other. In an implementation, the flow channel F formed in the first to third directions Z1, Z2, and Z3 may include the first to third flow channels F1, F2, and F3 connected to each other. In an implementation, the first and second flow channels F1 and F2 respectively extending in the first and second directions Z1 and Z2 may be connected to each other and may extend cross each other. The second flow channel F2 may extend in the second direction Z2 and the third flow channel F3 may extend in the third direction Z3, and the second flow channel F2 and the third flow channel F3 may be directly connected to each other. In an implementation, the second flow channel F2 formed in the flange portion 55 may be directly connected to the third flow channel F3 formed in the side portion 51. The second and third flow channels F2 and F3 may be directly connected to each other across or at a bent portion 53 (e.g., corner) that connects the flange portion 55 and the side portion 51 of the insulating frame 50 to each other. In an implementation, the first and second flow channels F1 and F2 may be directly connected to each other and may extend across each other. In an implementation, the second and third flow channels F2 and F3 may be directly connected to each other at a position at which a change in flow direction would occur. In an implementation, the direct connection between the first and second flow channels F1 and F2, e.g., may result in the adhesive A injected into the first flow channel F1 diffusing into the second flow channel F2. In an implementation, the direct connection between the second and third flow channels F2 and F3, e.g., may result in the adhesive A injected into the second flow channel F2 diffusing into the third flow channel F3. In an implementation, diffusion of the adhesive A into the third flow channel F3 may result from the injection of the adhesive A into the first and second flow channels F1 and F2.

In an implementation, the first flow channel F1 may extend (e.g., lengthwise) along the longitudinal direction of the flange portion 55 (e.g., the first direction Z1 at one side of the insulating frame 50 shown in Fig. 4). In an implementation, the second flow channel F2 may extend (e.g., lengthwise) along the width direction of the flange portion 55 (e.g., the second direction Z2 crossing the first direction Z1 at the one side of the insulating frame 50 shown in Fig. 4). In an implementation, the third flow channel F3 may extend (e.g., lengthwise) along the height or vertical direction of the side portion 51 (e.g., the third direction Z3 crossing the first and second directions Z1 and Z2 shown in Fig. 4).

In an implementation, in a state in which at least a portion of the opening OP or the first and second flow channels F1 and F2 formed in the flange portion 55 is filled with the adhesive A, an increase in pressure of the adhesive A (due to the weight of the battery cell 10 as the battery cell 10 is accommodated in the second direction Z2) may force or cause the adhesive A to flow. In an implementation, the adhesive A filling the opening OP of the insulating frame 50 may flow into the first and second flow channels F1 and F2, or the adhesive A filling the first and second flow channels F1 and F2 may flow into the third flow channel F3. In an implementation, the first to third flow channels F1, F2, and F3 may respectively follow the first to third directions Z1, Z2, and Z3 which are different from each other and may be connected to each other while extending in one direction. In an implementation, each of the first to third flow channels F1, F2, and F3 may not extend in only one direction, and may have a partially bent or curved portion or shape. In an implementation, the first and second flow channels F1 and F2 formed in the flange portion 55 and the third flow channel F3 formed in the side portion 51 (connected to the flange portion 55 at the bent portion 53) may entirely provide a three-dimensional flow channel F in the insulating frame 50.

The flow channel F may be formed by stepped portions which are recessed in a depth direction of the flange portion 55 or side portion 51 from or relative to the convex pattern P protruding from the flange portion 55 or side portion 51 of the insulating frame 50. In an implementation, the flow channel F may be formed by a stepped portion from adjacent convex patterns P. In an implementation, the flow channel F may be formed by a gap between adjacent convex patterns P in the insulating frame 50 (corresponding to the stepped portion from the adjacent convex patterns P).

In an implementation, the convex pattern P may include an isolation pattern PI provided in an inner region (or referred to as an inner isolation pattern PI) and a connection pattern PO provided in an outer region (or referred to as an outer connection pattern PO). One of first flow channels F1 (e.g., extending in the first direction Z1 on the flange portion 55) may be formed between the opening OP and the inner isolation pattern PI, and another first flow channel F1 (e.g., extending in the first direction Z1 on the flange portion 55) may be formed between the inner isolation pattern PI and the outer connection pattern PO. In an implementation, a pair of first flow channels F1 may extend (e.g., in parallel) along the flange portion 55. One first flow channel F1 adjacent to the opening OP may be between the opening OP and the inner isolation pattern PI and may be a stepped portion stepped or recessed from the isolation pattern PI. Another first flow channel F1 adjacent to the side portion 51 may be between the inner isolation pattern PI and the outer connection pattern PO, and may be a gap (e.g., recessed) between the inner isolation pattern PI and the outer connection pattern PO. Throughout this specification, the inner and outer regions may refer to a position proximate to the opening OP and a position distal to the opening OP, respectively (e.g., in the second direction Z2). In an implementation, the inner and outer regions may refer to a position distal to the side portion 51 and a position proximate to the side portion 51, respectively. In an implementation, the first flow channel F1 may extend on the flange portion 55 around the opening OP, e.g., such that the first flow channel F1 may have a portion extending lengthwise in the first direction Z1 and a portion extending lengthwise in the second direction Z2, depending on which portion of the flange portion 55 the first flow channel F1 is on. In an implementation, the second flow channels F2 may also include portions extending lengthwise in the first direction Z1 or the second direction Z2, depending on which portion of the flange portion 55 the second flow channel F2 is on.

In an implementation, the first and second flow channels F1 and F2 may extend on the flange portion 55 in the first and second directions Z1 and Z2 which are different from each other. In an implementation, the first and second flow channels F1 and F2 may be connected to each other and may completely surround the inner isolation pattern PI on the flange portion 55. The second flow channel F2 may be along the connection pattern PO continuously on the flange portion 55 and the side portion 51 and may be connected to the third flow channel F3 on the side portion 51.

In an implementation, a pair of first flow channels F1 may be spaced apart (e.g., in the second direction Z2) at both inner and outer sides of the inner isolation pattern PI on the flange portion 55. In an implementation, second flow channels F2 may be spaced apart (e.g., in the first direction Z1) on both front and rear sides of the isolation pattern PI. In an implementation, the direct connection between the first and second flow channels F1 and F2 while extending across each other may mean that inner isolation patterns PI and outer connection patterns PO are aligned with each other (e.g., in the first direction Z1), and the second flow channel F2 between the inner isolation patterns PI and the second flow channel F2 between the outer connection patterns PO may be connected to each other (e.g., in the second direction Z2). In an implementation, the second flow channel F2 may extend across the first flow channel F1 (that extends between the inner isolation pattern PI and the outer connection pattern PO).

In an implementation, the depths of the first and second flow channels F1 and F2 may correspond to height differences between the bottoms of the first and second flow channels F1 and F2 and the supporting surfaces of the convex patterns P that form stepped portions in the first and second flow channels F1 and F2. In an implementation, the depths of the first and second flow channels F1 and F2, the heights in relation to the depths of the first and second flow channels F1 and F2, or a first level L1 corresponding to the bottom of each of the first and second flow channels F1 and F2 and a second level L2 corresponding to the bottom of the battery cell 10, which are described below, may correspond to dimensions in the third direction Z3. The depths of the first and second flow channels F1 and F2 may be related to the accommodation limit for (e.g., a maximum amount of) the adhesive A that is accommodatable in each of the first and second flow channels F1 and F2. As described below, the battery cell 10 may be seated on the supporting surfaces of the convex patterns P that define the first and second flow channels F1 and F2. In an implementation, the height of the battery cell 10 (e.g., the height of the bottom 12 of the battery cell 10), e.g., the second level L2 of the supporting surface of the convex pattern P providing a seating surface for the battery cell 10 may be set to the upper limit of the liquid level of the adhesive A, and the adhesive A may be accommodated in the first and second flow channels F1 and F2. As described below, an excess of the adhesive A (e.g., any adhesive A exceeding the accommodation limit of the first and second flow channels F1 and F2) may fill the third flow channel F3 as the battery cell 10 is accommodated, e.g., as the excess adhesive A is pushed up from the first and second flow channels F1 and F2 on the flange portion 55 toward the third flow channel F3 on the side portion 51 in a state where the battery cell 10 is supported on the convex pattern P, while setting, as the limit of the liquid level, the height of the battery cell 10 (e.g., the height of the bottom 12 of the battery cell 10) or the supporting surface of the convex pattern P.

In an implementation, the bottoms of the first and second flow channels F1 and F2 may be at the same height as the first level L1 from the bottom of the insulating frame 50 (e.g., the bottom of the flange portion 55). In an implementation, the supporting surfaces of the convex patterns P that form stepped portions in the first and second flow channels F1 and F2 may be at the same height as the second level L2 from the bottom of the insulating frame 50 (e.g., the bottom of the flange portion 55). In an implementation, the depths of the first and second flow channels F1 and F2 may respectively correspond to height differences between the bottoms of the first and second flow channels F1 and F2 and the supporting surfaces of the convex patterns P. In an implementation, the depths of the first and second flow channels F1 and F2 may be equal to each other as the height difference between the first and second levels L1 and L2.

In an implementation, the convex patterns P formed on the flange portion 55 may be at the same height as the second level L2 from the bottom of the from the bottom of the insulating frame 50 (e.g., the bottom of the flange portion 55). The convex patterns P at the same second level L2 may provide the supporting surfaces for the battery cell 10 and may support the battery cell 10 at a balanced or uniform height.

In an implementation, the third flow channel F3 may be a gap between adjacent convex patterns P on the side portion 51 of the insulating frame 50, e.g., a gap between adjacent connection patterns PO among the convex patterns P. In an implementation, the third flow channel F3 may be a gap between adjacent convex patterns P (the connection patterns PO) on the side portion 51. In an implementation, the connection patterns PO of the side portion 51 may continuously extend from the connection patterns PO of the flange portion 55.

In an implementation, the third flow channel F3 may continuously extend from the second flow channel F2 of the flange portion 55 across the bent portion 53 between the flange portion 55 and the side portion 51. In an implementation, the third flow channel F3 between the connection patterns PO of the side portion 51 may extend continuously from the second flow channel F2 between the isolation patterns PI of the flange portion 55 and between the connection patterns PO of the flange portion 55, and the second and third flow channels F2 and F3 may be continuously formed with respect to each other. In an implementation, the second flow channel F2 on the flange portion 55 may be between adjacent isolation patterns PI and between adjacent connection patterns PO. The isolation patterns PI and the connection patterns PO may be aligned with each other (e.g., in the first direction Z1), and thus, the second flow channel F2 between the adjacent isolation patterns PI and the second flow channel F2 between the adjacent connection patterns PO may be continuously connected to each other. In an implementation, the connection patterns PO on the flange portion 55 may continuously extend onto the side portion 51, and the second flow channel F2 between the adjacent connection patterns PO on the flange portion 55 may be continuously connected to the third flow channel F3 between the adjacent connection patterns PO on the side portion 51.

In an implementation, the connection patterns PO of the flange portion 55 and the side portion 51 of the insulating frame 50 may be aligned with each other (e.g., in the first direction Z1). In an implementation, a gap between the connection patterns PO of the flange portion 55 and a gap between the connection patterns PO of the side portion 51 may be aligned with each other (e.g., in the first direction Z1), and the second and third flow channels F2 and F3 in the gaps may be continuous with each other. In an implementation, the second flow channel F2 on the flange portion 55 may extend (e.g., in the second direction Z2) and may be directly connected to and in fluid communication with the third flow channel F3 of the side portion 51 across the bent portion 53 (that connects the flange portion 55 to the side portion 51).

The liquid level of or in the third flow channel F3, e.g., the liquid level of the adhesive A filling the third flow channel F3, may be related to or dependent upon the accommodation limit for the adhesive A provided by the first and second flow channels F1 and F2. In an implementation, the excess adhesive A, e.g., the adhesive A exceeding the accommodation limit for the adhesive A provided by the depths of the first and second flow channels F1 and F2 or the height differences between the first and second levels L1 and L2, may fill (e.g., at least a part of) the third flow channel F3. In an implementation, regarding the liquid level of the adhesive A filling the first to third flow channels F1, F2, and F3, the height of the liquid level may correspond to a height in the third direction Z3 corresponding to a direction in which the battery cells 10 are assembled or the direction of gravity.

In an implementation, in a state where the insulating frame 50 is inserted into the housing frame 100 before the battery cell 10 is assembled or inserted thereinto, the adhesive A may fill the housing frame 100 from or at the bottom thereof. In an implementation, the battery cell 10 may be seated on the supporting surface of the flange portion 55 of the insulating frame 50 according to assembly of the battery cell 10, and the adhesive A filling the bottom of the housing frame 100 may spread. The excess adhesive A (e.g., exceeding the limits of the first and second flow channels F1 and F2 provided by the heights of the supporting surfaces on which the battery cell 10 is seated) may be pushed (e.g., outwardly) by the weight of the battery cell 10 and may be diffused or flow from the first and second flow channels F1 and F2 toward or into the third flow channel F3 to (e.g., at least partially) fill the third flow channel F3. Throughout this specification, the liquid level of the third flow channel F3 may be related to the accommodation limit of the adhesive A provided by the first and second flow channels F1 and F2. In an implementation, the adhesive A may not completely fill the third flow channel F3, e.g., the adhesive A filling at least a part of the third flow channel F3 may form the third adhesive portion that exerts adhesive force between the side portion 51 of the insulating frame 50 and the side surface of the battery cell 10. Throughout this specification, all of the side portion 51 of the insulating frame 50 and the side surface 15 (e.g., the narrow side surface) of the battery cell 10, which partially exert the adhesive force, may be defined as the third adhesive portion.

In an implementation, an upper limit liquid level of each of the first and second flow channels F1 and F2 may be defined by the supporting surfaces of the convex patterns P on the flange portion 55 on which the battery cell 10 is seated. The liquid level of the third flow channel F3 may be formed as the excess adhesive A flows into the third flow channel F3 according to the accommodation limit of the first and second flow channels F1 and F2. In an implementation, the height (e.g., the third level L3) of the liquid level in the third flow channel F3 may be greater than the height (e.g., the second level L2) of the liquid level of each of the first and second flow channels F1 and F2 from the bottom of the insulating frame 50 (e.g., the bottom of the flange portion 55). In an implementation, the liquid level of the third flow channel F3 may be related to or determined by the accommodation limit of the first and second flow channels F1 and F2. In an implementation, the adhesive A in the third flow channel F3 may fill only a part of the third flow channel F3 on the side portion 51, and thus, the liquid level of the third flow channel F3 may be at the third level L3, which is lower than the upper end of the third flow channel F3. In an implementation, the adhesive A in the third flow channel F3 may fill only a part of the third flow channel F3 that is at a low level, e.g., adjacent to the flange portion 55. In an implementation, the third flow channel F3 may extend along the entire height of the side portion 51 from the second level L2 (corresponding to the bottom of the second flow channel F2 continuously formed with the third flow channel F3) to the upper end of the side portion 51. In an implementation, the liquid level of the third flow channel F3 may be at the third level L3, which is lower than the upper end of the side portion 51, and may not fill the entire height of the side portion 51. In an implementation, the adhesive A of the third flow channel F3 may fill only a part of the third flow channel F3, e.g., the liquid level of the third flow channel F3 may be at the third level L3 that is lower than the entire height of the side portion 51 or may fill the entire third flow channel F3, e.g., the entire height of the third flow channel F3. In an implementation, considering the adhesive strength of the third adhesive portion formed by the adhesive A that fills the third flow channel F3, the adhesive A in the third flow channel F3 may fill the entire height of the third flow channel F3 or 10 % or more of the entire height of the side portion 51.

In an implementation, the liquid level in the first and second flow channels F1 and F2 may be the same as the height of the supporting surface of the flange portion 55 on which the battery cell 10 is seated (e.g., the second level L2), and the liquid level in the first and second flow channels F1 and F2 may be the same as that of the adhesive A that fills the opening OP. In an implementation, the liquid level in the first and second flow channels F1 and F2 may refer to the liquid level of the adhesive A which is formed uniformly over all of the insulating frame 50 and the portion of the housing frame 100 exposed through the opening OP of the insulating frame 50. In an implementation, the liquid level of the adhesive A filling the opening OP of the insulating frame 50 and the liquid level of the adhesive A filling the first and second flow channels F1 and F2 may form or settle at substantially the same first plane (e.g., at the second level L2). In an implementation, the first plane may be at the same plane as the supporting surface of the convex pattern P on which the bottom of the battery cell 10 is supported.

In an implementation, the liquid level of the third flow channel F3 may be related to the accommodation limit of the first and second flow channels F1 and F2, and the accommodation limit of the first and second flow channels F1 and F2 may be provided by the height of the supporting surface of the flange portion 55 on which the battery cell 10 is supported. In an implementation, the accommodation limit of the adhesive A (e.g., the amount of adhesive A accommodatable in the battery pack) may also be related to both the flange portion 55 and the housing frame 100 that is exposed through the opening OP to accommodate the adhesive A, rather than being provided only by the configuration of the flange portion 55. In an implementation, the accommodation limit of the adhesive A may be understood as considering the accommodation limit of the adhesive A that is accommodate in both the insulating frame 50 (e.g., the first and second flow channels F1 and F2) and the housing frame 100 (e.g., the bottom of the housing frame 100 exposed by the opening OP in the insulating frame 50).

In an implementation, the adhesive A filling the opening OP of the insulating frame 50 may form the first adhesive portion with the bottom of the battery cell 10. In an implementation, the adhesive A filling the first to third flow channels F1, F2, and F3 of the insulating frame 50 may form the second adhesive portion with the bottom 12 of the battery cell 10 or may form the third adhesive portion with the side surface 15 (e.g., the narrow side) of the battery cell 10. The area of the opening OP of the insulating frame 50 filled with the adhesive A may be greater than the sum of the areas of the first to third flow channels F1, F2, and F3 filled with the adhesive A. The first adhesive portion may provide adhesion to the center of the bottom 12 of the battery cell 10. In an implementation, in order to firmly adhere the battery cell 10, the area of the first adhesive portion or the area of the opening OP filled with the adhesive A to form the first adhesive portion may be greater than the total area of the first to third flow channels F1, F2, and F3 filled with the adhesive A.

By way of summation and review, a small mobile device, such as a mobile phone, may operate for a certain period of time with only the output and capacity of a single battery. If use for a long period of time and high power are required, such as a large-sized mobile device that includes a laptop or an electric vehicle or a hybrid vehicle that consumes a lot of power, a pack type including a plurality of batteries may be used due to the output and capacity thereof. Also, the output voltage or output current may be increased according to the number of batteries embedded therein.

The battery pack according to the present disclosure may provide the three-dimensional adhesion between the housing frame accommodating the battery cells, the insulating frame providing insulation from the battery cells inside the housing frame, and the battery cells, thereby firmly fixing the battery cells accommodated in the insulating frame and the housing frame.

One or more embodiments may provide a battery pack with three-dimensional adhesion between a housing frame accommodating battery cells, an insulating frame providing insulation from the battery cells inside the housing frame, and the battery cells, so that the battery cells accommodated in the insulating frame and the housing frame are firmly fixed.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a housing frame (100) configured to accommodate at least one battery cell (10); and
an insulating frame (50) provided between the at least one battery cell (10) and the housing frame (100), the insulating frame (50) including:
an opening (OP) through which a bottom (12) of the at least one battery cell (10) is exposed to a bottom of the housing frame (100),
a flange portion (55) that extends along a periphery of the opening (OP), defines the opening (OP), and faces the bottom (12) of the at least one battery cell (10), and
a side portion (51) that is bent from the flange portion (55) and faces a side surface (13, 15) of the at least one battery cell (10),
wherein the flange portion (55) of the insulating frame (50) includes:
a convex pattern (P) that protrudes toward the bottom (12) of the at least one battery cell (10), and **characterized in that** the flange portion (55) further includes
at least one flow channel (F) that forms a flow path for an adhesive (A), the at least one flow channel (F) being a stepped portion stepped down from the convex pattern (P) in a depth direction of the flange portion (55) opposite to the bottom (12) of the at least one battery cell (10).

2. The battery pack as claimed in claim 1, wherein the at least one flow channel (F) includes at least one flow channel (F1, F2) formed on the flange portion (55) of the insulating frame (50) and at least one flow channel (F3) formed on the side portion (51) of the insulating frame (50).

3. The battery pack as claimed in claim 2, wherein:
the at least one flow channel (F1, F2) formed on the flange portion (55) includes:
a first flow channel (F1) extending in a longitudinal direction of the flange portion (55) of the insulating frame (50),
and a second flow channel (F2) extending in a width direction of the flange portion (55) of the insulating frame (50) that crosses the longitudinal direction of the flange portion (55) of the insulating frame (50); and
the at least one flow channel (F3) formed on the side portion (51) includes a third flow channel (F3) extending in a height direction (Z3) of the side portion (51) of the insulating frame (50), the height direction (Z3) crossing the width direction of the flange portion (55) and the longitudinal direction of the flange portion (55).

4. The battery pack as claimed in claim 3, wherein the third flow channel (F3) continuously extends from the second flow channel (F2) formed on the flange portion (55) of the insulating frame (50).

5. The battery pack as claimed in claim 3 or 4, wherein the convex pattern (P) includes:
an isolation pattern (PI) that is surrounded by the first and second flow channels (F1, F2) and is formed at an inner position of the flange portion (55) of the insulating frame (50) adjacent to the opening (OP); and
a connection pattern (PO) that extends toward the side portion (51) of the insulating frame (50) at an outer position of the flange portion (55) of the insulating frame (50) adjacent to the side portion (51), the first flow channel (F1) extending between the isolation pattern (PI) and the connection pattern (PO).

6. The battery pack as claimed in claim 5, wherein:
the second flow channel (F2) is formed between adjacent isolation patterns (PI) and between adjacent connection patterns (PO), and
a section of the second flow channel (F2) formed between the adjacent isolation patterns (PI) and a section of the second flow channel (F2) formed between the adjacent connection patterns (PO) are continuously connected to each other.

7. The battery pack as claimed in claim 5 or 6, wherein the third flow channel (F3) is formed between adjacent connection patterns (PO) formed on the side portion (51) of the insulating frame (50).

8. The battery pack as claimed in any one of claims 1 to 7, wherein the bottom (12) of the at least one battery cell (10) is supported on a supporting surface of the convex pattern (P).

9. The battery pack as claimed in any one of claims 1 to 8,
further comprising the at least one battery cell (10) accommodated in the housing frame (100) including the insulating frame (50) therein, and
an adhesive (A) provided on the bottom of the housing frame (100), wherein the adhesive (A) is flowable along the at least one flow channel (F) in response to a pressure applied due to a weight of the at least one battery cell (10), preferably the adhesive (A) is flowable from the first and second flow channels (F1, F2) formed on the flange portion (55) of the insulating frame (50) towards the third flow channel (F3) formed on the side portion (51) of the insulating frame (50) in response to the pressure applied due to the weight of the at least one battery cell (10).

10. The battery pack as claimed in any one of claims 3 to 9, wherein:
the battery pack is configured to allow an excess adhesive (A), which exceeds an accommodation limit of the adhesive (A) provided by the first and second flow channels (F1, F2) formed on the flange portion (55) of the insulating frame (50), to at least partially fill the third flow channel (F3) formed on the side portion (51) of the insulating frame (50).

11. The battery pack as claimed in any one of claims 2 to 9, further comprising an adhesive (A), wherein the adhesive (A) fills an entirety of the at least one flow channel (F1, F2) formed on the flange portion (55) of the insulating frame (50) and fills a portion of the flow channel (F3) formed on the side portion (51) of the insulating frame (50), preferably the adhesive fills 10 % or more of a total height of the flow channel (F3) formed on the side portion (51) of the insulating frame (50).

12. The battery pack as claimed in any one of claims 2 to 11, wherein:
the bottom (12) of the at least one battery cell (10):
is coupled to the housing frame (100) at a first adhesion region therebetween, the first adhesion region including the adhesive (A) filling the opening (OP), and
is coupled to the insulating frame (50) at a second adhesion region therebetween, the second adhesion region including the adhesive (A) filling the at least one flow channel (F1, F2) formed on the flange portion (55) of the insulating frame (50), and
the side surface (13, 15) of the at least one battery cell (10) is coupled to the insulating frame (50) at a third adhesion region therebetween, the third adhesion region including the adhesive (A) filling the flow channel (F3) formed on the side portion (51) of the insulating frame (50).

13. The battery pack as claimed in claim 12, wherein an area of the opening (OP) filled with the adhesive (A) is greater than a sum of areas of the flow channels (F1, F2, F3) formed on the flange portion (55) and on the side portion (51) of the insulating frame (50) filled with the adhesive (A).

14. The battery pack as claimed in claim 12 or 13, wherein an upper surface of the adhesive (A) filled in the opening (OP) and an upper surface of the adhesive (A) filled in the at least one channel (F1, F2) formed on the flange portion (55) of the insulating frame (50) are substantially coplanar.

15. The battery pack as claimed in claim 19, wherein a supporting surface of the convex pattern (P) on which the bottom (12) of the at least one battery cell (10) is supported is substantially coplanar with the upper surface of the adhesive (A) filled in the opening (OP) and the upper surface of the adhesive (A) filled in the at least one channel (F1, F2) formed on the flange portion (55) of the insulating frame (50).

## Patentansprüche

1. Batteriepack, Folgendes umfassend:
einen Gehäuserahmen (100), der dazu ausgestaltet ist, mindestens eine Batteriezelle (10) aufzunehmen; und
einen Isolierrahmen (50), der zwischen der mindestens einen Batteriezelle (10) und dem Gehäuserahmen (100) vorgesehen ist, wobei der Isolierrahmen (50) Folgendes umfasst:
eine Öffnung (OP), durch die ein Boden (12) der mindestens einen Batteriezelle (10) zu einem Boden des Gehäuserahmens (100) freiliegt,
einen Flanschabschnitt (55), der sich entlang eines Umfangs der Öffnung (OP) erstreckt, die Öffnung (OP) definiert und dem Boden (12) der mindestens einen Batteriezelle (10) zugewandt ist, und
einen Seitenabschnitt (51), der von dem Flanschabschnitt (55) abgewinkelt ist und einer Seitenfläche (13, 15) der mindestens einen Batteriezelle (10) zugewandt ist,
wobei der Flanschabschnitt (55) des Isolierrahmens (50) Folgendes umfasst:
ein konvexes Muster (P), das in Richtung des Bodens (12) der mindestens einen Batteriezelle (10) vorsteht, und **dadurch gekennzeichnet, dass** der Flanschabschnitt (55) ferner mindestens einen Fließkanal (F) aufweist, der einen Fließweg für einen Klebstoff (A) ausbildet, wobei der mindestens eine Fließkanal (F) ein abgestufter Abschnitt ist, der von dem konvexen Muster (P) in einer Tiefenrichtung des Flanschabschnitts (55) gegenüber dem Boden (12) der mindestens einen Batteriezelle (10) nach unten abgestuft ist.

2. Batteriepack nach Anspruch 1, wobei der mindestens eine Fließkanal (F) mindestens einen Fließkanal (F1, F2), der auf dem Flanschabschnitt (55) des Isolierrahmens (50) ausgebildet ist, und mindestens einen Fließkanal (F3), der auf dem Seitenabschnitt (51) des Isolierrahmens (50) ausgebildet ist, umfasst.

3. Batteriepack nach Anspruch 2, wobei:
der mindestens eine Fließkanal (F1, F2), der auf dem Flanschabschnitt (55) ausgebildet ist, Folgendes umfasst:
einen ersten Fließkanal (F1), der sich in einer Längsrichtung des Flanschabschnitts (55) des Isolierrahmens (50) erstreckt,
und einen zweiten Fließkanal (F2), der sich in einer Breitenrichtung des Flanschabschnitts (55) des Isolierrahmens (50) erstreckt, die die Längsrichtung des Flanschabschnitts (55) des Isolierrahmens (50) kreuzt; und
der mindestens eine Fließkanal (F3), der auf dem Seitenabschnitt (51) ausgebildet ist, einen dritten Fließkanal (F3) umfasst, der sich in einer Höhenrichtung (Z3) des Seitenabschnitts (51) des Isolierrahmens (50) erstreckt, wobei die Höhenrichtung (Z3) die Breitenrichtung des Flanschabschnitts (55) und die Längsrichtung des Flanschabschnitts (55) kreuzt.

4. Batteriepack nach Anspruch 3, wobei sich der dritte Fließkanal (F3) durchgängig von dem zweiten Fließkanal (F2) aus erstreckt, der auf dem Flanschabschnitt (55) des Isolierrahmens (50) ausgebildet ist.

5. Batteriepack nach Anspruch 3 oder 4, wobei das konvexe Muster (P) Folgendes umfasst:
ein Isolationsmuster (PI), das von dem ersten und zweiten Fließkanal (F1, F2) umgeben ist und an einer inneren Position des Flanschabschnitts (55) des Isolierrahmens (50) benachbart zu der Öffnung (OP) ausgebildet ist; und
ein Verbindungsmuster (PO), das sich in Richtung des Seitenabschnitts (51) des Isolierrahmens (50) an einer äußeren Position des Flanschabschnitts (55) des Isolierrahmens (50) benachbart zu dem Seitenabschnitt (51) erstreckt, wobei sich der erste Fließkanal (F1) zwischen dem Isolationsmuster (PI) und dem Verbindungsmuster (PO) erstreckt.

6. Batteriepack nach Anspruch 5, wobei:
der zweite Fließkanal (F2) zwischen benachbarten Isolationsmustern (PI) und zwischen benachbarten Verbindungsmustern (PO) ausgebildet ist und
ein Abschnitt des zweiten Fließkanals (F2), der zwischen den benachbarten Isolationsmustern (PI) ausgebildet ist, und ein Abschnitt des zweiten Fließkanals (F2), der zwischen den benachbarten Verbindungsmustern (PO) ausgebildet ist, durchgängig miteinander verbunden sind.

7. Batteriepack nach Anspruch 5 oder 6, wobei der dritte Fließkanal (F3) zwischen benachbarten Verbindungsmustern (PO) ausgebildet ist, die auf dem Seitenabschnitt (51) des Isolierrahmens (50) ausgebildet sind.

8. Batteriepack nach einem der Ansprüche 1 bis 7, wobei der Boden (12) der mindestens einen Batteriezelle (10) auf einer Stützfläche des konvexen Musters (P) abgestützt ist.

9. Batteriepack nach einem der Ansprüche 1 bis 8,
ferner umfassend: mindestens eine Batteriezelle (10), die in dem Gehäuserahmen (100) mit dem darin befindlichen Isolierrahmen (50) aufgenommen ist, und
einen Klebstoff (A), der auf dem Boden des Gehäuserahmens (100) vorgesehen ist, wobei der Klebstoff (A) als Reaktion auf einen Druck, der aufgrund eines Gewichts der mindestens einen Batteriezelle (10) ausgeübt wird, entlang des mindestens einen Fließkanals (F) fließfähig ist, wobei der Klebstoff (A) vorzugsweise von dem ersten und zweiten Fließkanal (F1, F2), die auf dem Flanschabschnitt (55) des Isolierrahmens (50) ausgebildet sind, in Richtung des dritten Fließkanals (F3), der auf dem Seitenabschnitt (51) des Isolierrahmens (50) ausgebildet ist, als Reaktion auf den Druck, der aufgrund des Gewichts der mindestens einen Batteriezelle (10) ausgeübt wird, fließfähig ist.

10. Batteriepack nach einem der Ansprüche 3 bis 9, wobei:
der Batteriepack dazu ausgestaltet ist, es einem überschüssigen Klebstoff (A), der eine Aufnahmegrenze des Klebstoffs (A), der durch den ersten und zweiten Fließkanal (F1, F2) bereitgestellt wird, die auf dem Flanschabschnitt (55) des Isolierrahmens (50) ausgebildet sind, überschreitet, zu erlauben, den dritten Fließkanal (F3), der auf dem Seitenabschnitt (51) des Isolierrahmens (50) ausgebildet ist, mindestens teilweise zu füllen.

11. Batteriepack nach einem der Ansprüche 2 bis 9, ferner umfassend einen Klebstoff (A), wobei der Klebstoff (A) eine Gesamtheit des mindestens einen Fließkanals (F1, F2) füllt, der auf dem Flanschabschnitt (55) des Isolierrahmens (50) ausgebildet ist, und einen Teil des Fließkanals (F3) füllt, der auf dem Seitenabschnitt (51) des Isolierrahmens (50) ausgebildet ist, wobei der Klebstoff vorzugsweise 10 % oder mehr einer Gesamthöhe des Fließkanals (F3) füllt, der auf dem Seitenabschnitt (51) des Isolierrahmens (50) ausgebildet ist.

12. Batteriepack nach einem der Ansprüche 2 bis 11, wobei:
der Boden (12) der mindestens einen Batteriezelle (10):
mit dem Gehäuserahmen (100) in einem ersten Klebebereich dazwischen verbunden ist, wobei der erste Klebebereich den Klebstoff (A) enthält, der die Öffnung (OP) füllt, und
mit dem Isolierrahmen (50) in einem zweiten Klebebereich dazwischen verbunden ist, wobei der zweite Klebebereich den Klebstoff (A) enthält, der den mindestens einen Fließkanal (F1, F2) füllt, der auf dem Flanschabschnitt (55) des Isolierrahmens (50) ausgebildet ist, und
die Seitenfläche (13, 15) der mindestens einen Batteriezelle (10) mit dem Isolierrahmen (50) in einem dritten Klebebereich dazwischen verbunden ist, wobei der dritte Klebebereich den Klebstoff (A) enthält, der den Fließkanal (F3) füllt, der auf dem Seitenabschnitt (51) des Isolierrahmens (50) ausgebildet ist.

13. Batteriepack nach Anspruch 12, wobei eine Fläche der Öffnung (OP), die mit dem Klebstoff (A) gefüllt ist, größer ist als eine Summe der Flächen der Fließkanäle (F1, F2, F3), die auf dem Flanschabschnitt (55) und auf dem Seitenabschnitt (51) des Isolierrahmens (50) ausgebildet sind und die mit dem Klebstoff (A) gefüllt sind.

14. Batteriepack nach Anspruch 12 oder 13, wobei eine obere Fläche des Klebstoffs (A), der in die Öffnung (OP) gefüllt ist, und eine obere Fläche des Klebstoffs (A), der in den mindestens einen Kanal (F1, F2) gefüllt ist, der auf dem Flanschabschnitt (55) des Isolierrahmens (50) ausgebildet ist, im Wesentlichen koplanar sind.

15. Batteriepack nach Anspruch 19, wobei eine Stützfläche des konvexen Musters (P), auf dem der Boden (12) der mindestens einen Batteriezelle (10) abgestützt ist, im Wesentlichen koplanar mit der oberen Fläche des Klebstoffs (A), der in die Öffnung (OP) gefüllt ist, und der oberen Fläche des Klebstoffs (A), der in den mindestens einen Kanal (F1, F2) gefüllt ist, der auf dem Flanschabschnitt (55) des Isolierrahmens (50) ausgebildet ist, ist.

## Revendications

1. Bloc-batterie, comportant :
un cadre de boîtier (100) configuré pour loger au moins une cellule de batterie (10) ; et
un cadre isolant (50) disposé entre l'au moins une cellule de batterie (10) et le cadre de boîtier (100), le cadre isolant (50) incluant :
une ouverture (OP) à travers laquelle un fond (12) de l'au moins une cellule de batterie (10) est exposé à un fond du cadre de boîtier (100),
une partie bride (55) qui s'étend le long d'une périphérie de l'ouverture (OP), définit l'ouverture (OP) et fait face au fond (12) de l'au moins une cellule de batterie (10), et
une partie latérale (51) qui est courbée à partir de la partie bride (55) et fait face à une surface latérale (13, 15) de l'au moins une cellule de batterie (10),
dans lequel la partie bride (55) du cadre isolant (50) inclut :
un motif convexe (P) qui fait saillie vers le bas (12) de l'au moins une cellule de batterie (10), et **caractérisé en ce que** la partie bride (55) inclut en outre
au moins un canal d'écoulement (F) qui forme un trajet d'écoulement pour un adhésif (A), l'au moins un canal d'écoulement (F) étant une partie étagée qui descend du motif convexe (P) dans une direction de profondeur de la partie bride (55) à l'opposé du fond (12) de l'au moins une cellule de batterie (10).

2. Bloc-batterie selon la revendication 1, dans lequel l'au moins un canal d'écoulement (F) inclut au moins un canal d'écoulement (F1, F2) formé sur la partie bride (55) du cadre isolant (50) et au moins un canal d'écoulement (F3) formé sur la partie latérale (51) du cadre isolant (50).

3. Bloc-batterie selon la revendication 2, dans lequel :
l'au moins un canal d'écoulement (F1, F2) formé sur la partie bride (55) inclut :
un premier canal d'écoulement (F1) s'étendant dans une direction longitudinale de la partie bride (55) du cadre isolant (50),
et un deuxième canal d'écoulement (F2) s'étendant dans une direction de largeur de la partie bride (55) du cadre isolant (50) qui traverse la direction longitudinale de la partie bride (55) du cadre isolant (50) ; et
l'au moins un canal d'écoulement (F3) formé sur la partie latérale (51) inclut un troisième canal d'écoulement (F3) s'étendant dans une direction de hauteur (Z3) de la partie latérale (51) du cadre isolant (50), la direction de hauteur (Z3) traversant la direction de largeur de la partie bride (55) et la direction longitudinale de la partie bride (55).

4. Bloc-batterie selon la revendication 3, dans lequel le troisième canal d'écoulement (F3) s'étend en continu à partir du deuxième canal d'écoulement (F2) formé sur la partie bride (55) du cadre isolant (50).

5. Bloc-batterie selon la revendication 3 ou 4, dans lequel le motif convexe (P) inclut :
un motif d'isolation (PI) qui est entouré des premier et deuxième canaux d'écoulement (F1, F2) et est formé à une position interne de la partie bride (55) du cadre isolant (50) adjacente à l'ouverture (OP) ; et
un motif de connexion (PO) qui s'étend vers la partie latérale (51) du cadre isolant (50) à une position externe de la partie bride (55) du cadre isolant (50) adjacente à la partie latérale (51), le premier canal d'écoulement (F1) s'étendant entre le motif d'isolation (PI) et le motif de connexion (PO).

6. Bloc-batterie selon la revendication 5, dans lequel :
le deuxième canal d'écoulement (F2) est formé entre des motifs d'isolation (PI) adjacents et entre des motifs de connexion (PO) adjacents, et
une section du deuxième canal d'écoulement (F2) formée entre les motifs d'isolation (PI) adjacents et une section du deuxième canal d'écoulement (F2) formée entre les motifs de connexion (PO) adjacents sont connectées en continu l'une à l'autre.

7. Bloc-batterie selon la revendication 5 ou 6, dans lequel le troisième canal d'écoulement (F3) est formé entre des motifs de connexion (PO) adjacents formés sur la partie latérale (51) du cadre isolant (50).

8. Bloc-batterie selon l'une quelconque des revendications 1 à 7, dans lequel le fond (12) de l'au moins une cellule de batterie (10) est supporté sur une surface de support du motif convexe (P).

9. Bloc-batterie selon l'une quelconque des revendications 1 à 8,
comportant en outre l'au moins une cellule de batterie (10) logée dans le cadre de boîtier (100) incluant le cadre isolant (50) en son sein, et
un adhésif (A) disposé sur le fond du cadre de boîtier (100), dans lequel l'adhésif (A) est fluide le long de l'au moins un canal d'écoulement (F) en réponse à une pression appliquée en raison d'un poids de l'au moins une cellule de batterie (10), de préférence l'adhésif (A) est fluide à partir des premier et deuxième canaux d'écoulement (F1, F2) formés sur la partie bride (55) du cadre isolant (50) vers le troisième canal d'écoulement (F3) formé sur la partie latérale (51) du cadre isolant (50) en réponse à la pression appliquée en raison du poids de l'au moins une cellule de batterie (10).

10. Bloc-batterie selon l'une quelconque des revendications 3 à 9, dans lequel :
le bloc-batterie est configuré pour permettre à un excès d'adhésif (A), qui dépasse une limite de logement de l'adhésif (A) fourni par les premier et deuxième canaux d'écoulement (F1, F2) formés sur la partie bride (55) du cadre isolant (50), de remplir au moins partiellement le troisième canal d'écoulement (F3) formé sur la partie latérale (51) du cadre isolant (50).

11. Bloc-batterie selon l'une quelconque des revendications 2 à 9, comportant en outre un adhésif (A), dans lequel l'adhésif (A) remplit une totalité de l'au moins un canal d'écoulement (F1, F2) formé sur la partie bride (55) du cadre isolant (50) et remplit une partie du canal d'écoulement (F3) formé sur la partie latérale (51) du cadre isolant (50), de préférence l'adhésif remplit 10 % ou plus d'une hauteur totale du canal d'écoulement (F3) formé sur la partie latérale (51) du cadre isolant (50).

12. Bloc-batterie selon l'une quelconque des revendications 2 à 11, dans lequel :
le fond (12) de l'au moins une cellule de batterie (10) :
est accouplé au cadre de boîtier (100) au niveau d'une première région d'adhérence intermédiaire, la première région d'adhérence incluant l'adhésif (A) remplissant l'ouverture (OP), et
est accouplé au cadre isolant (50) au niveau d'une deuxième région d'adhérence intermédiaire, la deuxième région d'adhérence incluant l'adhésif (A) remplissant l'au moins un canal d'écoulement (F1, F2) formé sur la partie bride (55) du cadre isolant (50), et la surface latérale (13, 15) de l'au moins une cellule de batterie (10) est accouplée au cadre isolant (50) au niveau d'une troisième région d'adhérence intermédiaire, la troisième région d'adhérence incluant l'adhésif (A) remplissant le canal d'écoulement (F3) formé sur la partie latérale (51) du cadre isolant (50).

13. Bloc-batterie selon la revendication 12, dans lequel une superficie de l'ouverture (OP) remplie d'adhésif (A) est plus grande qu'une somme des superficies des canaux d'écoulement (F1, F2, F3) formés sur la partie bride (55) et sur la partie latérale (51) du cadre isolant (50) rempli d'adhésif (A).

14. Bloc-batterie selon la revendication 12 ou 13, dans lequel une surface supérieure de l'adhésif (A) remplissant l'ouverture (OP) et une surface supérieure de l'adhésif (A) remplissant l'au moins un canal (F1, F2) formé sur la partie bride (55) du cadre isolant (50) sont sensiblement coplanaires.

15. Bloc-batterie selon la revendication 19, dans lequel une surface de support du motif convexe (P) sur laquelle est supporté le fond (12) de l'au moins une cellule de batterie (10) est sensiblement coplanaire avec la surface supérieure de l'adhésif (A) remplissant l'ouverture (OP) et la surface supérieure de l'adhésif (A) remplissant l'au moins un canal (F1, F2) formé sur la partie bride (55) du cadre isolant (50).
